# EUROPÄISCHE PATENTANMELDUNG

(11) **EP 4 851 783 A1**
(43) Veröffentlichungstag der Anmeldung: **09.12.2026**
(21) Anmeldenummer: 25180750.9
(22) Anmeldetag: 04.06.2025
(51) Int. Cl.: G06F 8/41, B60W 60/00, G06F 11/3668

(54) **VERFAHREN UND SYSTEM ZUR OPTIMIERUNG EINER AUSFÜHRUNG EINES VERARBEITUNGSGRAPHEN**

(71) Anmelder: dSPACE SE & Co. KG, 33102 Paderborn (DE)
(72) Erfinder: Hammer, Jan Hendrik, 33102 Paderborn (DE); Sauer, Fabian, 33102 Paderborn (DE)

(57) **Zusammenfassung**

Die Erfindung betrifft ein computer-implementiertes Verfahren zur Optimierung einer Ausführung eines Verarbeitungsgraphen (10) eines virtuellen Tests (12) für eine automatisierte Fahrfunktion (14) eines Fahrzeugs, umfassend ein Anwenden eines Clusteringalgorithmus (20) auf den Verarbeitungsgraphen (10), um die Knoten (16) des Verarbeitungsgraphen (10) zu Clustern (22) zusammenzufassen, wobei jedes Cluster (22) eine oder mehrere Subfunktionen (16a) des virtuellen Tests (12) und/oder der automatisierten Fahrfunktion (14) des Fahrzeugs repräsentiert, wobei eine Kostenfunktion des Clusteringalgorithmus (20) das Clustering des Verarbeitungsgraphen (10) in Bezug auf eine Ausführungseffizienz des Verarbeitungsgraphen (10) maximiert; und ein Ausgeben eines zweiten Datensatzes (DS2) eines optimierten Clusterings der Subfunktionen (16a) der automatisierten Fahrfunktion (14) des Fahrzeugs. Die Erfindung betrifft des Weiteren ein System (1) zur Optimierung einer Ausführung eines Verarbeitungsgraphen (10) eines virtuellen Tests (12) für eine automatisierte Fahrfunktion (14) eines Fahrzeugs.

## Beschreibung

Die Erfindung betrifft ein computer-implementiertes Verfahren zur Optimierung einer Ausführung eines Verarbeitungsgraphen eines virtuellen Tests für eine automatisierte Fahrfunktion eines Fahrzeugs.

Die Erfindung betrifft des Weiteren ein System zur Optimierung einer Ausführung eines Verarbeitungsgraphen eines virtuellen Tests für eine automatisierte Fahrfunktion eines Fahrzeugs.

Die Erfindung betrifft ferner ein Computerprogrammprodukt mit einem Computerprogramm sowie einen computerlesbaren Datenträger mit Programmcode eines Computerprogramms.

### Stand der Technik

Die Entwicklung automatisierter Fahrfunktionen hat in den letzten Jahren erhebliche Fortschritte gemacht. Fortschrittliche Fahrerassistenzsysteme (ADAS) und hochautomatisierte Fahrzeuge sind in der Lage, immer komplexere Fahrszenarien eigenständig zu bewältigen. Die zugrunde liegenden Systeme beruhen auf der Verarbeitung großer Mengen an Sensordaten, leistungsfähigen Algorithmen und künstlicher Intelligenz, um eine sichere und zuverlässige Steuerung zu gewährleisten.

Damit automatisierte Fahrfunktionen unter vielfältigen Verkehrsbedingungen zuverlässig arbeiten, müssen sie umfassend getestet und optimiert werden. Während physische Testfahrten ein wesentlicher Bestandteil der Validierung sind, stoßen sie in ihrer Skalierbarkeit an Grenzen. Die Vielzahl potenzieller Verkehrssituationen und die Notwendigkeit, sicherheitskritische Szenarien gezielt zu überprüfen, erfordern ergänzende Methoden, die eine effiziente und systematische Überprüfung der Systemleistung ermöglichen.

Virtuelle Testverfahren spielen hierbei eine immer größere Rolle. Sie ermöglichen es, automatisierte Fahrfunktionen unter kontrollierten Bedingungen zu analysieren und zu optimieren. Dies umfasst unter anderem die Erprobung neuer Softwarestände, die Integration zusätzlicher Sensoren und die Simulation von Szenarien, die im realen Straßenverkehr nur schwer nachzustellen sind. Durch den gezielten Einsatz virtueller Tests können Entwicklungszeiten verkürzt, Kosten reduziert und die Sicherheit erhöht werden.

Mit zunehmender Systemkomplexität wachsen jedoch auch die Herausforderungen in der Validierung und Optimierung. Die Verarbeitung großer Datenmengen erfordert erhebliche Rechenkapazitäten, und selbst kleine Änderungen in der Software oder Sensorik können weitreichende Auswirkungen auf das Gesamtsystem haben. Um eine effiziente und präzise Analyse sicherzustellen, müssen Testmethoden kontinuierlich weiterentwickelt werden, sodass Änderungen gezielt nachvollzogen und bewertet werden können.

Die derzeitige Praxis der Validierung basiert oft auf festgelegten Abläufen, die durch erfahrene Entwickler gesteuert werden. Dies kann jedoch mit einem hohen manuellen Aufwand verbunden sein und erfordert tiefgehendes Fachwissen. In einem dynamischen Entwicklungsprozess ist es daher von entscheidender Bedeutung, Methoden bereitzustellen, die eine flexible und effiziente Anpassung an neue Anforderungen ermöglichen.

Aufgabe der Erfindung ist es somit, ein Verfahren und ein System bereitzustellen, das eine effiziente Verarbeitung und Analyse von Testdaten ermöglicht, um Entwicklungszeiten zu reduzieren und die Anpassungsfähigkeit an neue Systemanforderungen zu verbessern.

### Offenbarung der Erfindung

Die Aufgabe wird durch ein computerimplementiertes Verfahren zur Optimierung einer Ausführung eines Verarbeitungsgraphen eines virtuellen Tests für eine automatisierte Fahrfunktion eines Fahrzeugs mit den Merkmalen des Patentanspruchs 1 gelöst.

Die Aufgabe wird des Weiteren durch ein System zur Optimierung einer Ausführung eines Verarbeitungsgraphen eines virtuellen Tests für eine automatisierte Fahrfunktion eines Fahrzeugs mit den Merkmalen des Patentanspruchs 13 gelöst.

Die Aufgabe wird ferner gelöst durch ein Computerprogrammprodukt mit einem Computerprogramm gemäß Anspruch 14 sowie durch einen computerlesbaren Datenträger mit Programmcode eines Computerprogramms gemäß Anspruch 15.

Die Erfindung betrifft ein computerimplementiertes Verfahren zur Optimierung einer Ausführung eines Verarbeitungsgraphen eines virtuellen Tests für eine automatisierte Fahrfunktion eines Fahrzeugs.

Das Verfahren umfasst ein Bereitstellen eines ersten Datensatzes eines Verarbeitungsgraphen, der einen virtuellen Test für eine automatisierte Fahrfunktion eines Fahrzeugs beschreibt, wobei der Verarbeitungsgraph durch Knoten repräsentierte Subfunktionen der automatisierten Fahrfunktion aufweist, und wobei Kanten des Verarbeitungsgraphen einen Datenfluss zwischen den Subfunktionen definieren.

Des Weitern umfasst das Verfahren ein Anwenden eines Clusteringalgorithmus auf den Verarbeitungsgraphen, um die Knoten des Verarbeitungsgraphen zu Clustern zusammenzufassen, wobei jedes Cluster eine oder mehrere Subfunktionen des virtuellen Tests und/oder der automatisierten Fahrfunktion des Fahrzeugs repräsentiert, wobei eine Kostenfunktion des Clusteringalgorithmus das Clustering des Verarbeitungsgraphen in Bezug auf eine Ausführungseffizienz des Verarbeitungsgraphen maximiert, und ein Ausgeben eines zweiten Datensatzes eines optimierten Clusterings der Subfunktionen der automatisierten Fahrfunktion des Fahrzeugs.

Die Erfindung betrifft ein System zur Optimierung einer Ausführung eines Verarbeitungsgraphen eines virtuellen Tests für eine automatisierte Fahrfunktion eines Fahrzeugs.

Das System umfasst eine Datenbereitstellungseinheit, die konfiguriert ist, einen ersten Datensatz eines Verarbeitungsgraphen bereitzustellen. Dieser Verarbeitungsgraph beschreibt einen virtuellen Test für eine automatisierte Fahrfunktion eines Fahrzeugs und weist durch Knoten repräsentierte Subfunktionen der automatisierten Fahrfunktion auf, wobei Kanten des Verarbeitungsgraphen einen Datenfluss zwischen den Subfunktionen definieren.

Des Weiteren umfasst das System eine Clustereinheit, die konfiguriert ist, einen Clusteringalgorithmus auf den Verarbeitungsgraphen anzuwenden, um die Knoten des Verarbeitungsgraphen zu Clustern zusammenzufassen. Dabei repräsentiert jedes Cluster eine oder mehrere Subfunktionen des virtuellen Tests und/oder der automatisierten Fahrfunktion des Fahrzeugs. Eine Kostenfunktion des Clusteringalgorithmus maximiert das Clustering des Verarbeitungsgraphen in Bezug auf eine Ausführungseffizienz des Verarbeitungsgraphen.

Das System umfasst zudem eine Ausgabeeinheit, die konfiguriert ist, einen zweiten Datensatz eines optimierten Clusterings der Subfunktionen der automatisierten Fahrfunktion des Fahrzeugs auszugeben.

Ein Verarbeitungsgraph ist eine strukturierte Repräsentation eines virtuellen Tests für eine automatisierte Fahrfunktion eines Fahrzeugs. Er besteht aus mehreren Knoten, die einzelne Subfunktionen der Fahrfunktion oder des Testprozesses abbilden. Diese Knoten sind durch Kanten miteinander verbunden, die den Datenfluss zwischen den Subfunktionen definieren. Der Verarbeitungsgraph bildet die Abfolge und Abhängigkeiten der Verarbeitungsschritte ab und kann verschiedene Berechnungs- und Entscheidungsprozesse innerhalb eines Testsystems oder der Fahrfunktion selbst modellieren.

Knoten innerhalb des Verarbeitungsgraphen repräsentieren individuelle Subfunktionen, die zur Durchführung eines virtuellen Tests oder zur Berechnung von Fahrfunktionen erforderlich sind. Eine Subfunktion kann beispielsweise eine Vorverarbeitungseinheit, eine Sensordatenfusion, eine Entscheidungslogik oder eine KPI-Berechnung umfassen. Jede dieser Subfunktionen führt eine definierte Berechnung oder Transformation durch und gibt das Ergebnis an nachgelagerte Subfunktionen weiter.

Die Kanten im Verarbeitungsgraphen definieren den Datenfluss zwischen den einzelnen Knoten. Sie stellen sicher, dass die Ausgabe einer Subfunktion als Eingabe für nachfolgende Subfunktionen verwendet wird. Dadurch wird eine strukturierte Verarbeitung der Daten ermöglicht, wobei jede Subfunktion auf Basis der vorhergehenden Berechnung arbeitet. Kanten können zudem unterschiedliche Datenformate und Abhängigkeiten zwischen den Subfunktionen repräsentieren.

Ein Clusteringalgorithmus ist eine Rechenmethode zur Gruppierung von Subfunktionen innerhalb des Verarbeitungsgraphen. Er fasst mehrere Knoten zu Clustern zusammen, wobei jedes Cluster eine oder mehrere Subfunktionen des virtuellen Tests und/oder der automatisierten Fahrfunktion enthalten kann. Ziel des Clusteringalgorithmus ist es, eine optimale Gruppierung der Subfunktionen zu bestimmen, um die Rechen- und Speichereffizienz zu maximieren.

Ein Cluster ist eine Gruppierung von einem oder mehreren Knoten innerhalb des Verarbeitungsgraphen. Durch die Bildung von Clustern können bestimmte Subfunktionen gemeinsam verarbeitet werden, um einen Bereitstellungs- und Zwischenspeicherungsaufwand für die Zwischenergebnisse innerhalb eines Clusters zu verringern und den Test- oder Verarbeitungsaufwand zu optimieren. Die Struktur und Anzahl der Cluster beeinflussen die Effizienz des virtuellen Tests oder der Fahrfunktion.

Die Kostenfunktion des Clusteringalgorithmus ist ein mathematisches Kriterium, das die Qualität einer Clusterbildung anhand bestimmter Parameter bewertet. Sie berücksichtigt beispielsweise die Rechenzeit, den Speicherverbrauch, den Datendurchsatz oder die Änderungsrate einzelner Subfunktionen. Ziel der Kostenfunktion ist es, ein Clustering zu erzeugen, das die Ausführungseffizienz des Verarbeitungsgraphen optimiert.

Ein optimiertes Clustering bezeichnet eine durch den Clusteringalgorithmus erzeugte Gruppierung der Subfunktionen, die auf Basis der Kostenfunktion als besonders effizient eingestuft wird. Das optimierte Clustering minimiert unnötige Neuberechnungen, reduziert die Speicheranforderungen und verbessert die Skalierbarkeit des Systems.

Die Datenbereitstellungseinheit ist eine Systemkomponente, die den ersten Datensatz und ggf. weitere Datensätze eines Verarbeitungsgraphen bereitstellt, beispielsweise Kamera-, CAN- und/oder Groundtruth-Daten. Sie enthält die relevanten Daten und definiert die initiale Struktur des Verarbeitungsgraphen, einschließlich der enthaltenen Subfunktionen und ihrer Verbindungen.

Die Clustereinheit ist eine Systemkomponente, die den Clusteringalgorithmus auf den Verarbeitungsgraphen anwendet. Sie analysiert die Struktur des Verarbeitungsgraphen, berechnet mögliche Clusterbildungen und wendet die Kostenfunktion an, um eine optimale Gruppierung der Knoten zu bestimmen.

Die Ausgabeeinheit ist eine Systemkomponente, die den zweiten Datensatz eines optimierten Clusterings bereitstellt. Sie gibt das optimierte Clustering der Subfunktionen aus, das anschließend für die weitere Verarbeitung oder Simulation genutzt werden kann.

Die Optimierung der Verarbeitung und Analyse von Sensordaten für automatisierte Fahrfunktionen stellt eine zunehmende Herausforderung dar, insbesondere im Kontext virtueller Testumgebungen. Da automatisierte Fahrzeuge auf eine Vielzahl von Sensordaten angewiesen sind, um Fahrsituationen korrekt zu interpretieren, ist eine effiziente Strukturierung der Datenverarbeitung essenziell. Eine ineffiziente Organisation der Verarbeitungsschritte kann zu erhöhtem Rechenaufwand, unnötigen Neuberechnungen und einer insgesamt längeren Entwicklungszeit führen.

Durch eine gezielte Strukturierung der Verarbeitungsschritte wird die Effizienz der gesamten Berechnung verbessert. Eine strukturierte Anordnung einzelner Berechnungsprozesse innerhalb eines Modells zur Sensordatenverarbeitung ermöglicht es, Abhängigkeiten zwischen Berechnungen gezielt zu berücksichtigen. Auf diese Weise werden unnötige Wiederholungen vermieden, sodass einzelne Module innerhalb der Datenverarbeitung nicht mehrfach ausgeführt werden müssen, wenn dies nicht erforderlich ist.

Die Optimierung der Ausführungseffizienz bezieht sich dabei nicht nur auf einen einzelnen Testdurchlauf, sondern auch auf die langfristige Reduzierung der Rechenaufwände über eine Vielzahl von Testdurchläufen.

Durch eine adaptive Clusterbildung wird die Verarbeitungsstruktur des Systems in Abhängigkeit von Änderungen optimiert, was zu einer messbaren Reduzierung des Gesamt-Rechenaufwands führt.

Mit zunehmender Komplexität von Systemen für automatisiertes Fahren steigen die Anforderungen an Speicher- und Rechenressourcen erheblich. Eine optimierte Organisation der Berechnungen sorgt dafür, dass nur die wirklich notwendigen Verarbeitungsschritte erneut ausgeführt werden, wenn Änderungen vorgenommen werden. Dadurch sinkt der Gesamtaufwand für die Simulation und Validierung von Fahrfunktionen, wodurch sich Entwicklungszeiten verkürzen und verfügbare Rechenkapazitäten effizienter genutzt werden.

Zudem ermöglicht eine intelligente Organisation der Datenverarbeitung eine flexible Anpassung an Änderungen innerhalb des Systems. Während klassische Verfahren zur Testsimulation oft starre Strukturen verwenden, die eine vollständige Neuberechnung sämtlicher Daten erfordern, kann durch eine gezielte Gruppierung einzelner Verarbeitungsschritte sichergestellt werden, dass bereits vorhandene Berechnungsergebnisse wiederverwendet werden. Dadurch wird eine adaptive Anpassung an verschiedene Softwarestände und Testkonfigurationen möglich.

Eine verbesserte Anordnung der Datenverarbeitung führt darüber hinaus zu einer Reduzierung des Speicherbedarfs, da weniger Zwischenberechnungen gespeichert werden müssen. Dadurch wird die Effizienz der Nutzung von Speicherressourcen erhöht, insbesondere in Umgebungen mit begrenzten Rechenkapazitäten. Gleichzeitig wird sichergestellt, dass die relevanten Daten jederzeit schnell und zuverlässig abrufbar sind, wodurch die Gesamtsystemleistung verbessert wird.

Ein weiterer Effekt der gezielten Strukturierung der Verarbeitungsschritte ist eine verbesserte Nachvollziehbarkeit der durchgeführten Berechnungen. Eine klare Organisation der Abläufe innerhalb einer Testumgebung erlaubt eine bessere Analyse der Ergebnisse und erleichtert es Entwicklern, gezielt einzelne Module zu verändern, ohne unerwartete Auswirkungen auf andere Systemkomponenten zu riskieren. Dies ist insbesondere für die Fehleranalyse und für die iterative Optimierung von Algorithmen von Bedeutung.

Darüber hinaus trägt eine optimierte Organisation der Verarbeitungsschritte zur Skalierbarkeit der Testverfahren bei. In modernen Entwicklungsprozessen müssen Tests flexibel erweitert oder angepasst werden können, um neuen Anforderungen gerecht zu werden. Eine durchdachte Strukturierung der Abläufe sorgt dafür, dass bestehende Berechnungsmodelle mit minimalem Anpassungsaufwand erweitert oder modifiziert werden können. Dies erleichtert die Integration neuer Sensordaten, Algorithmusänderungen oder veränderte Testanforderungen, ohne dass der gesamte Berechnungsprozess von Grund auf neu konzipiert werden muss.

Durch die gezielte Berücksichtigung von Rechenaufwand, Speicherbedarf und Änderungsraten einzelner Verarbeitungsschritte wird zudem sichergestellt, dass die Gesamtperformance von Test- und Simulationssystemen verbessert wird. Dies hat unmittelbare Auswirkungen auf die Geschwindigkeit, mit der neue Softwarestände getestet und freigegeben werden können, und reduziert den Entwicklungsaufwand für hochautomatisierte Fahrfunktionen.

Schließlich verbessert sich durch eine effiziente Strukturierung der Verarbeitungsschritte auch die Stabilität von Testverfahren. Da einzelne Verarbeitungsschritte gezielt zusammengefasst oder voneinander getrennt behandelt werden können, lassen sich unerwartete Interferenzen zwischen unterschiedlichen Berechnungen minimieren. Dies sorgt für zuverlässigere Testergebnisse und erhöht die Qualität der durchgeführten Simulationen.

Insgesamt trägt eine durchdachte Organisation der Verarbeitungsschritte dazu bei, die Effizienz der Testverfahren für automatisierte Fahrfunktionen erheblich zu steigern. Eine intelligente Strukturierung sorgt für eine effizientere Nutzung von Rechenressourcen, reduziert unnötige Berechnungen und erleichtert die Anpassung an neue Anforderungen. Dies führt zu einer insgesamt höheren Leistungsfähigkeit der Testverfahren und verkürzt Entwicklungszeiten in einem zunehmend komplexen Umfeld.

Gemäß einer bevorzugten Weiterbildung der Erfindung ist vorgesehen, dass die Kostenfunktion des Clusteringalgorithmus Ausführungskosten jeder Subfunktion des Verarbeitungsgraphen berücksichtigt, wobei die Ausführungskosten eine benötigte Rechenzeit und/oder eine Verwendung von Prozessorressourcen umfassen.

Die Kostenfunktion berücksichtigt nicht nur die Rechenzeit und Speicheranforderungen, sondern auch die voraussichtliche Änderungsrate einzelner Subfunktionen. Dadurch wird verhindert, dass häufig geänderte Funktionen in Clustern zusammengefasst werden, die sonst bei jeder Änderung neu berechnet werden müssten.

Durch die Einbindung der benötigten Rechenzeit und der Nutzung von Prozessorressourcen in die Bewertung der Clusterbildung wird sichergestellt, dass die Berechnungen innerhalb des Verarbeitungsgraphen effizient ausgeführt werden. Dies führt dazu, dass die verfügbaren Prozessorressourcen optimal genutzt werden, wodurch Engpässe vermieden und Verzögerungen reduziert werden. Dadurch bleibt das Gesamtsystem reaktionsfähig, auch wenn sich die Rechenanforderungen dynamisch ändern.

Gemäß einer bevorzugten Weiterbildung der Erfindung ist vorgesehen, dass die Kostenfunktion des Clusteringalgorithmus Speicherkosten jeder Subfunktion umfasst, wobei die Speicherkosten einen Speicherplatz zur Zwischenspeicherung von Zwischenergebnissen umfassen.

Die Speicherung von Zwischenergebnissen benötigt Speicherplatz, der je nach Hardwareverfügbarkeit unterschiedlich limitiert sein kann. Durch die Berücksichtigung der Speicherkosten wird gewährleistet, dass die Nutzung der verfügbaren Speicherressourcen effizient erfolgt. Dadurch lassen sich unnötige Speicherzugriffe reduzieren, was die Gesamtsystemleistung verbessert und zu einer besseren Skalierbarkeit führt, insbesondere bei großen Testdatenmengen oder beschränkten Speicherkapazitäten.

Gemäß einer bevorzugten Weiterbildung der Erfindung ist vorgesehen, dass die Zwischenergebnisse an Übergabepunkten, insbesondere vordefinierten Schnittstellen, innerhalb des Verarbeitungsgraphen, gespeichert werden, wobei der Clusteringalgorithmus Speicherorte der Zwischenergebnisse in Abhängigkeit von Eigenschaften verfügbarer Speicherhardware, insbesondere eine Zugriffszeit, der Speicherplatz und/oder ein Datendurchsatz, auswählt.

Die gezielte Speicherung von Zwischenergebnissen an vordefinierten Schnittstellen innerhalb des Verarbeitungsgraphen ermöglicht eine strukturierte Verarbeitung der Daten. Durch die Auswahl der Speicherorte basierend auf Eigenschaften der Hardware, wie Zugriffszeit oder Datendurchsatz, wird sichergestellt, dass der Zugriff auf gespeicherte Daten möglichst effizient erfolgt. Dadurch werden unnötige Verzögerungen reduziert, und das System kann mit variierenden Speicherarchitekturen flexibel umgehen.

Gemäß einer bevorzugten Weiterbildung der Erfindung ist vorgesehen, dass die Kostenfunktion des Clusteringalgorithmus eine Änderungsrate der Subfunktionen berücksichtigt, wobei die Änderungsrate eine Häufigkeit einer Änderung und Neuberechnung der Subfunktionen ist.

Bestimmte Subfunktionen innerhalb eines Verarbeitungsgraphen unterliegen häufigen Änderungen, während andere stabil bleiben. Durch die Einbindung der Änderungsrate in die Kostenfunktion wird ermöglicht, dass die Reorganisation des Verarbeitungsgraphen gezielt auf Bereiche mit hoher Änderungsrate ausgerichtet wird.

Dadurch werden unnötige Neuberechnungen in stabilen Teilen des Systems vermieden, während veränderliche Komponenten dynamisch angepasst werden können.

Gemäß einer bevorzugten Weiterbildung der Erfindung ist vorgesehen, dass der Clusteringalgorithmus beim Erstellen von Clustern Subfunktionen priorisiert, deren Änderungsrate eine Anzahl von Änderungen pro definiertem Zeitraum überschreitet, wobei Knoten mit einer Änderungsrate über einem vorgegebenen Schwellenwert zur Minimierung von Auswirkungen der Änderungen auf andere Cluster in separaten Clustern zusammengefasst werden.

Wenn bestimmte Subfunktionen häufig modifiziert werden, kann sich dies auf das gesamte Verarbeitungssystem auswirken. Indem solche Subfunktionen in separaten Clustern zusammengefasst werden, bleibt die Berechnung anderer Bereiche stabil und unbeeinflusst. Dies trägt dazu bei, die Auswirkungen von Änderungen zu begrenzen und sicherzustellen, dass sich Anpassungen gezielt auf die betroffenen Systembereiche beschränken.

Gemäß einer bevorzugten Weiterbildung der Erfindung ist vorgesehen, dass der Clusteringalgorithmus iteratives Clustering verwendet, bei dem erste Cluster gebildet werden, die mehrere Subfunktionen umfassen, und anschließend die ersten Cluster in zweite Subcluster unterteilt werden, wobei die zweiten Subcluster eine geringere Anzahl an Subfunktionen als die ersten Cluster umfassen.

Durch eine iterative Clusterbildung, bei der zunächst größere Cluster erstellt und anschließend in feinere Subcluster unterteilt werden, wird eine flexible Anpassung an unterschiedliche Rechenanforderungen ermöglicht. Dabei ist sichergestellt, dass der Gesamtgraph und alle Subfunktionen - unabhängig vom aktuellen Clustering - stets identische Ergebnisse liefern. Der Hauptvorteil einer detaillierten Unterteilung liegt darin, dass bei Änderungen einzelner Subfunktionen nicht der gesamte Verarbeitungsgraph neu berechnet werden muss. Stattdessen können gezielt nur die betroffenen Teilbereiche aktualisiert werden, was die Rechenlast reduziert und die Effizienz des Gesamtsystems verbessert.

Gemäß einer bevorzugten Weiterbildung der Erfindung ist vorgesehen, dass die Subfunktionen des Verarbeitungsgraphen Vorverarbeitungs-, Datenfusions-, Fahrfunktionsberechnungs- und KPI-Bewertungsaufgaben des virtuellen Tests und/oder der automatisierten Fahrfunktion des Fahrzeugs ausführen.

Innerhalb eines Verarbeitungsgraphen gibt es unterschiedliche Arten von Berechnungen, darunter Vorverarbeitung, Sensordatenfusion, Fahrfunktionsberechnung und die Ermittlung von Bewertungsmetriken. Durch die Berücksichtigung all dieser Funktionen innerhalb der Clusterbildung wird sichergestellt, dass die verschiedenen Prozesse effizient aufeinander abgestimmt sind und ihre Verarbeitung optimiert abläuft.

Gemäß einer bevorzugten Weiterbildung der Erfindung ist vorgesehen, dass der erste Datensatz des Verarbeitungsgraphen von einer virtuellen Testumgebung bereitgestellt wird, welche Sensordaten, insbesondere Kamera-, Lidar- und/oder Radardaten, eines Fahrzeugumfelds umfasst.

Die Bereitstellung des ersten Datensatzes durch eine virtuelle Testumgebung ermöglicht eine realitätsnahe Simulation verschiedener Fahrbedingungen. Dadurch können Sensordaten aus unterschiedlichen Quellen wie Kameras, Lidar oder Radar effizient genutzt werden, um das Verhalten der Fahrfunktion unter variierenden Bedingungen zu analysieren. Dies trägt zur Verbesserung der Robustheit und Anpassungsfähigkeit der getesteten Algorithmen bei.

Gemäß einer bevorzugten Weiterbildung der Erfindung ist vorgesehen, dass die Kostenfunktion des Clusteringalgorithmus durch Berücksichtigung von Parametern, die Datenflüsse und Abhängigkeiten zwischen Knoten repräsentieren, dynamisch angepasst wird.

Indem die Kostenfunktion des Clusteringalgorithmus dynamisch an die Struktur der Datenflüsse angepasst wird, kann die Clusterbildung flexibel auf Änderungen im Verarbeitungsgraphen reagieren. Dadurch wird sichergestellt, dass Abhängigkeiten zwischen Knoten berücksichtigt werden und sich die Berechnungsstruktur kontinuierlich an neue Anforderungen anpasst, ohne dass eine vollständige Neustrukturierung erforderlich ist.

Gemäß einer bevorzugten Weiterbildung der Erfindung ist vorgesehen, dass der Verarbeitungsgraph Subfunktionen umfasst, die unter Berücksichtigung einer Reihenfolge der Datenflüsse in einer hierarchischen Struktur gruppiert werden, wobei Clustern mit aufeinander folgenden Datenflüssen jeweils spezifische Verarbeitungsschritte zugeordnet werden.

Die Gruppierung von Subfunktionen in einer hierarchischen Struktur sorgt für eine effizientere Organisation der Datenverarbeitung. Durch die Berücksichtigung der Reihenfolge der Datenflüsse innerhalb dieser Struktur können Verarbeitungsschritte so angeordnet werden, dass sie optimal aufeinander aufbauen und eine schnelle Berechnung ermöglichen. Dies reduziert unnötige Wartezeiten zwischen einzelnen Prozessschritten und verbessert die Effizienz der Gesamtberechnung.

Gemäß einer bevorzugten Weiterbildung der Erfindung ist vorgesehen, dass der Clusteringalgorithmus eine Greedy-Optimierung verwendet, bei welcher die Kosten für alle möglichen Cluster berechnet und der günstigste ausgewählt wird.

Durch die Berechnung der Kosten für alle möglichen Cluster und die anschließende Auswahl der günstigsten Variante wird sichergestellt, dass eine möglichst effiziente Strukturierung des Verarbeitungsgraphen erfolgt. Dies ermöglicht eine schnelle und ressourcenschonende Berechnung der optimalen Clusterkonfiguration, ohne dass unnötige Rechenkapazitäten für suboptimale Strukturen verschwendet werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig.1: ein schematisches Flussdiagramm eines Ausführungsbeispiels eines computer-implementierten Verfahrens zur Optimierung einer Ausführung eines Verarbeitungsgraphen eines virtuellen Tests für eine automatisierte Fahrfunktion eines Fahrzeugs gemäß der bevorzugten Ausführungsform der vorliegenden Erfindung; und
- Fig.2: eine beispielhafte Veranschaulichung eines Systems zur Optimierung einer Ausführung eines Verarbeitungsgraphen eines virtuellen Tests für eine automatisierte Fahrfunktion eines Fahrzeugs gemäß der bevorzugten Ausführungsform der vorliegenden Erfindung.

### Ausführliche Beschreibung der Ausführungsformen

In den Figuren der Zeichnungen bezeichnen gleiche Bezugszeichen gleiche oder funktionsgleiche Elemente, Bauteile oder Komponenten, soweit nichts Gegenteiliges angegeben ist.

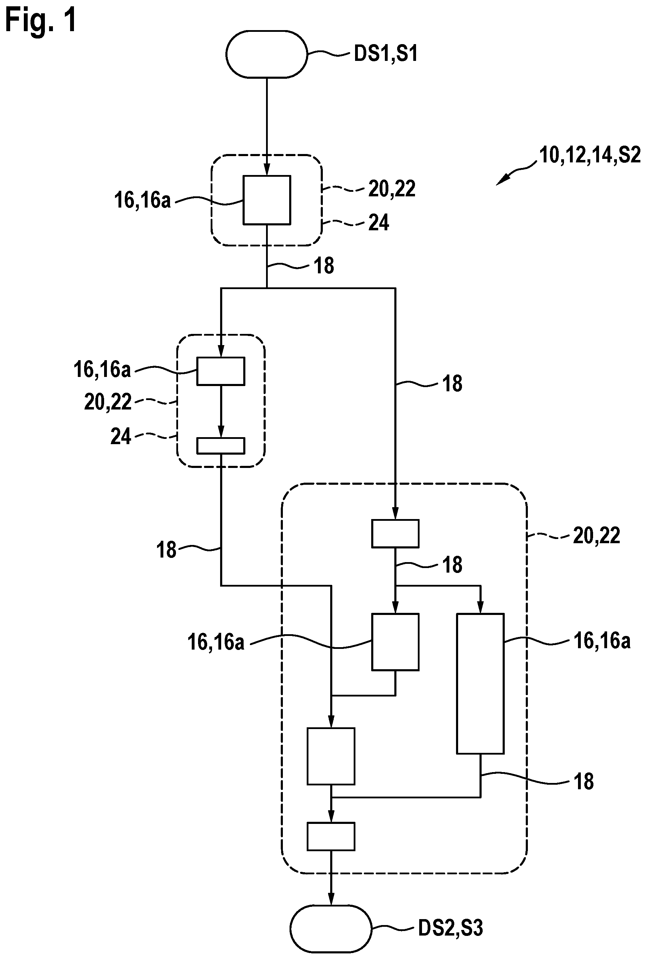

Fig.1 ein schematisches Flussdiagramm eines Ausführungsbeispiels eines computer-implementierten Verfahrens zur Optimierung einer Ausführung eines Verarbeitungsgraphen 10 eines virtuellen Tests 12 für eine automatisierte Fahrfunktion 14 eines Fahrzeugs gemäß der bevorzugten Ausführungsform der vorliegenden Erfindung.

Das Verfahren umfasst ein Bereitstellen S1 eines ersten Datensatzes DS1 eines Verarbeitungsgraphen 10, der einen virtuellen Test 12 für eine automatisierte Fahrfunktion 14 eines Fahrzeugs beschreibt, wobei der Verarbeitungsgraph 10 durch Knoten 16 repräsentierte Subfunktionen 16a der automatisierten Fahrfunktion 14 aufweist, und wobei Kanten 18 des Verarbeitungsgraphen 10 einen Datenfluss zwischen den Subfunktionen 16a definieren.

Des Weiteren umfasst das Verfahren ein Anwenden S2 eines Clusteringalgorithmus 20 auf den Verarbeitungsgraphen 10, um die Knoten 16 des Verarbeitungsgraphen 10 zu Clustern 22 zusammenzufassen, wobei jedes Cluster 22 eine oder mehrere Subfunktionen 16a des virtuellen Tests 12 und/oder der automatisierten Fahrfunktion 14 des Fahrzeugs repräsentiert, wobei eine Kostenfunktion des Clusteringalgorithmus 20 das Clustering des Verarbeitungsgraphen 10 in Bezug auf eine Ausführungseffizienz des Verarbeitungsgraphen 10 maximiert.

Darüber hinaus umfasst das Verfahren ein Ausgeben S3 eines zweiten Datensatzes DS2 eines optimierten Clusterings der Subfunktionen 16a des virtuellen Tests 12 und/oder der automatisierten Fahrfunktion 14 des Fahrzeugs.

Die Kostenfunktion des Clusteringalgorithmus 20 berücksichtigt Ausführungskosten jeder Subfunktion 16a des Verarbeitungsgraphen 10, wobei die Ausführungskosten eine benötigte Rechenzeit und/oder eine Verwendung von Prozessorressourcen umfassen.

Die Kostenfunktion des Clusteringalgorithmus 20 umfasst ferner Speicherkosten jeder Subfunktion 16a, wobei die Speicherkosten einen Speicherplatz zur Zwischenspeicherung von Zwischenergebnissen umfassen.

Die Zwischenergebnisse werden an Übergabepunkten 24, insbesondere vordefinierten Schnittstellen, innerhalb des Verarbeitungsgraphen 10, gespeichert, wobei der Clusteringalgorithmus 20 Speicherorte der Zwischenergebnisse in Abhängigkeit von Eigenschaften verfügbarer Speicherhardware, insbesondere eine Zugriffszeit, der Speicherplatz und/oder ein Datendurchsatz, auswählt.

Strukturell sind die Übergabepunkte 24 an entscheidenden Stellen im Verarbeitungsprozess angesiedelt. Ein Bereich ist die Aufbereitung von Eingangsdaten, insbesondere die Extraktion von Metadaten und Signalen aus Sensormessungen. Diese Daten fließen anschließend in Transformationsprozesse ein, in denen sie für nachfolgende Verarbeitungsschritte vorbereitet werden.

Ein weiterer Übergabepunkt 24 befindet sich zwischen einer Sensordatenfusion und einer Fahrfunktionsberechnung. Hier werden die verarbeiteten Daten aus verschiedenen Quellen - beispielsweise aus Kamera-, Lidar- und Radarsensoren - zusammengeführt und als einheitlicher Zustand des Fahrzeugumfelds gespeichert.

Darüber hinaus spielen die Übergabepunkte 24 eine Rolle in der KPI-Berechnung, die zur Evaluierung der automatisierten Fahrfunktion 14 verwendet wird. Die an diesen Übergabepunkten 24 gespeicherten Daten ermöglichen es, Änderungen im Clusteringalgorithmus 20 effizient umzusetzen, indem bereits berechnete Werte erneut genutzt werden, anstatt den gesamten Verarbeitungsgraphen 10 neu durchzuführen. Dies reduziert die Rechenlast erheblich und trägt zur Optimierung der gesamten Systemperformance bei.

Zusätzlich werden Übergabepunkte 24 so gesetzt, dass sie den Gesamtaufwand für die Datenspeicherung minimieren.

Wenn eine Subfunktion mit hoher Änderungsrate häufig angepasst wird, sorgt die Speicherung an diesen Punkten dafür, dass nur betroffene Teile des Verarbeitungsgraphen 10 neu berechnet werden. Dadurch wird sichergestellt, dass stabile Abschnitte der Verarbeitung nicht unnötig neu ausgeführt werden, was insbesondere für ressourcenintensive Prozesse wie Sensordatenfusion und Fahrentscheidungen von Bedeutung ist.

Die genaue Platzierung der Übergabepunkte 24 kann je nach Systemkonfiguration und Hardwarecharakteristik variieren. Mithilfe des Clusteringalgorithmus 20 wird das Clustering der Subfunktionen 16a so gesteuert, dass eine optimale Balance zwischen Rechenaufwand, Speicherbedarf und Änderungsfrequenz erreicht wird. Dabei werden häufig genutzte oder stark veränderte Subfunktionen 16a in separaten Clustern 22 gehalten, um deren Auswirkungen auf den Rest des Systems 1 zu minimieren.

Die Kostenfunktion des Clusteringalgorithmus 20 berücksichtigt eine Änderungsrate der Subfunktionen 16a, wobei die Änderungsrate eine Häufigkeit einer Änderung und Neuberechnung der Subfunktionen 16a ist.

Der Clusteringalgorithmus 20 priorisiert beim Erstellen von Clustern 22 des Weiteren Subfunktionen 16a, deren Änderungsrate eine Anzahl von Änderungen pro definiertem Zeitraum überschreitet, wobei Knoten 16 mit einer Änderungsrate über einem vorgegebenen Schwellenwert zur Minimierung von Auswirkungen der Änderungen auf andere Cluster 22 in separaten Clustern 22 zusammengefasst werden.

Darüber hinaus verwendet der Clusteringalgorithmus 20 iteratives Clustering, bei dem erste Cluster 22 gebildet werden, die mehrere Subfunktionen 16a umfassen, und anschließend die ersten Cluster 22 in zweite Subcluster 22 unterteilt werden, wobei die zweiten Subcluster 22 eine geringere Anzahl an Subfunktionen 16a als die ersten Cluster 22 umfassen.

Die Subfunktionen 16a des Verarbeitungsgraphen 10 führen Vorverarbeitungs-, Datenfusions-, Fahrfunktionsberechnungs- und KPI-Bewertungsaufgaben und KPI-Berechnungsaufgaben des virtuellen Tests 12 und/oder der automatisierten Fahrfunktion 14 des Fahrzeugs aus.

Der erste Datensatz DS1 des Verarbeitungsgraphen 10 wird von einer virtuellen Testumgebung bereitgestellt, welche Sensordaten, insbesondere Kamera-, Lidar- und/oder Radardaten, eines Fahrzeugumfelds umfasst.

Die Kostenfunktion des Clusteringalgorithmus 20 wird durch Berücksichtigung von Parametern, die Datenflüsse und Abhängigkeiten zwischen Knoten 16 repräsentieren, dynamisch angepasst.

Beispiele für Parameter, die die Kostenfunktion des Clusteringalgorithmus beeinflussen, sind die Datenflussmenge zwischen Knoten, die Rechenzeit pro Subfunktion und der Speicherbedarf für Zwischenergebnisse. Zudem spielen die Kommunikationskosten zwischen Clustern, die Abhängigkeiten zwischen Berechnungsschritten und die Änderungshäufigkeit einzelner Funktionen eine Rolle. Dynamische Anpassungen erfolgen anhand dieser Faktoren, um eine effiziente Verarbeitung zu gewährleisten und unnötige Neuberechnungen oder hohe Speicher- und Rechenkosten zu vermeiden.

Der Verarbeitungsgraph 10 umfasst ferner Subfunktionen 16a, die unter Berücksichtigung einer Reihenfolge der Datenflüsse in einer hierarchischen Struktur gruppiert werden, wobei Clustern 22 mit aufeinander folgenden Datenflüssen jeweils spezifische Verarbeitungsschritte zugeordnet werden.

Der Clusteringalgorithmus 20 verwendet überdies eine Greedy-Optimierung, bei welcher die Kosten für alle möglichen Cluster 22 berechnet und der günstigste ausgewählt wird.

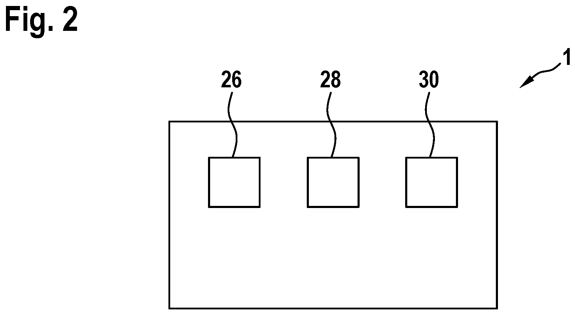

Fig.2 zeigt eine beispielhafte Veranschaulichung eines Systems 1 zur Optimierung einer Ausführung eines Verarbeitungsgraphen 10 eines virtuellen Tests 12 für eine automatisierte Fahrfunktion 14 eines Fahrzeugs gemäß der bevorzugten Ausführungsform der vorliegenden Erfindung.

Das System 1 umfasst eine Datenbereitstellungseinheit 26, die konfiguriert ist, einen ersten Datensatz eines Verarbeitungsgraphen 10 bereitzustellen. Dieser Verarbeitungsgraph 10 beschreibt einen virtuellen Test 12 für eine automatisierte Fahrfunktion 14 eines Fahrzeugs und weist durch Knoten 16 repräsentierte Subfunktionen 16a der automatisierten Fahrfunktion 14 auf, wobei Kanten 18 des Verarbeitungsgraphen 10 einen Datenfluss zwischen den Subfunktionen 16a definieren.

Des Weiteren umfasst das System 1 eine Clustereinheit 28, die konfiguriert ist, einen Clusteringalgorithmus 20 auf den Verarbeitungsgraphen 10 anzuwenden, um die Knoten 16 des Verarbeitungsgraphen 10 zu Clustern 22 zusammenzufassen. Dabei repräsentiert jedes Cluster 22 eine oder mehrere Subfunktionen 16a des virtuellen Tests 12 und/oder der automatisierten Fahrfunktion 14 des Fahrzeugs. Eine Kostenfunktion des Clusteringalgorithmus 20 maximiert das Clustering des Verarbeitungsgraphen 10 in Bezug auf eine Ausführungseffizienz des Verarbeitungsgraphen 10.

Das System 1 umfasst zudem eine Ausgabeeinheit 30, die konfiguriert ist, einen zweiten Datensatz eines optimierten Clusterings der Subfunktionen 16a des virtuellen Tests 12 und/oder der automatisierten Fahrfunktion 14 des Fahrzeugs auszugeben.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Die erfindungsgemäßen Verfahren können ferner zumindest abschnittsweise sequentiell oder parallel durchgeführt werden.

### Bezugszeichenliste

- 1: System
- 10: Verarbeitungsgraph
- 12: virtueller Test
- 14: automatisierte Fahrfunktion
- 16: Knoten
- 16a: Subfunktionen
- 18: Kanten
- 20: Clusteringalgorithmus
- 22: Cluster
- 24: Übergabepunkt(e)
- 26: Datenbereitstellungseinheit
- 28: Clustereinheit
- 30: Ausgabeeinheit
- DS1: erster Datensatz
- DS2: zweiter Datensatz
- S1 - S3: Verfahrensschritte

## Patentansprüche

1. Computer-implementiertes Verfahren zur Optimierung einer Ausführung eines Verarbeitungsgraphen (10) eines virtuellen Tests (12) für eine automatisierte Fahrfunktion (14) eines Fahrzeugs, umfassend die Schritte:
Bereitstellen (S1) eines ersten Datensatzes (DS1) eines Verarbeitungsgraphen (10), der einen virtuellen Test (12) für eine automatisierte Fahrfunktion (14) eines Fahrzeugs beschreibt, wobei der Verarbeitungsgraph (10) durch Knoten (16) repräsentierte Subfunktionen (16a) der automatisierten Fahrfunktion (14) aufweist, und
wobei Kanten (18) des Verarbeitungsgraphen (10) einen Datenfluss zwischen den Subfunktionen (16a) definieren;
Anwenden (S2) eines Clusteringalgorithmus (20) auf den Verarbeitungsgraphen (10), um die Knoten (16) des Verarbeitungsgraphen (10) zu Clustern (22) zusammenzufassen, wobei jedes Cluster (22) eine oder mehrere Subfunktionen (16a) des virtuellen Tests (12) und/oder der automatisierten Fahrfunktion (14) des Fahrzeugs repräsentiert, wobei eine Kostenfunktion des Clusteringalgorithmus (20) das Clustering des Verarbeitungsgraphen (10) in Bezug auf eine Ausführungseffizienz des Verarbeitungsgraphen (10) maximiert; und
Ausgeben (S3) eines zweiten Datensatzes (DS2) eines optimierten Clusterings der Subfunktionen (16a) des virtuellen Tests (12) und/oder der automatisierten Fahrfunktion (14) des Fahrzeugs.

2. Computer-implementiertes Verfahren nach Anspruch 1, wobei die Kostenfunktion des Clusteringalgorithmus (20) Ausführungskosten jeder Subfunktion (16a) des Verarbeitungsgraphen (10) berücksichtigt, wobei die Ausführungskosten eine benötigte Rechenzeit und/oder eine Verwendung von Prozessorressourcen umfassen.

3. Computer-implementiertes Verfahren nach Anspruch 1 oder 2, wobei die Kostenfunktion des Clusteringalgorithmus (20) Speicherkosten jeder Subfunktion (16a) umfasst, wobei die Speicherkosten einen Speicherplatz zur Zwischenspeicherung von Zwischenergebnissen umfassen.

4. Computer-implementiertes Verfahren nach Anspruch 3, wobei die Zwischenergebnisse an Übergabepunkten (24), insbesondere vordefinierten Schnittstellen, innerhalb des Verarbeitungsgraphen (10), gespeichert werden, wobei der Clusteringalgorithmus (20) Speicherorte der Zwischenergebnisse in Abhängigkeit von Eigenschaften verfügbarer Speicherhardware, insbesondere eine Zugriffszeit, der Speicherplatz und/oder ein Datendurchsatz, auswählt.

5. Computer-implementiertes Verfahren nach einem der vorhergehenden Ansprüche, wobei die Kostenfunktion des Clusteringalgorithmus (20) eine Änderungsrate der Subfunktionen (16a) berücksichtigt, wobei die Änderungsrate eine Häufigkeit einer Änderung und Neuberechnung der Subfunktionen (16a) ist.

6. Computer-implementiertes Verfahren nach Anspruch 5, wobei der Clusteringalgorithmus (20) beim Erstellen von Clustern (22) Subfunktionen (16a) priorisiert, deren Änderungsrate eine Anzahl von Änderungen pro definiertem Zeitraum überschreitet, wobei Knoten (16) mit einer Änderungsrate über einem vorgegebenen Schwellenwert zur Minimierung von Auswirkungen der Änderungen auf andere Cluster (22) in separaten Clustern (22) zusammengefasst werden.

7. Computer-implementiertes Verfahren nach einem der vorhergehenden Ansprüche, wobei der Clusteringalgorithmus (20) iteratives Clustering verwendet, bei dem erste Cluster (22) gebildet werden, die mehrere Subfunktionen (16a) umfassen, und anschließend die ersten Cluster (22) in zweite Subcluster (22) unterteilt werden, wobei die zweiten Subcluster (22) eine geringere Anzahl an Subfunktionen (16a) als die ersten Cluster (22) umfassen.

8. Computer-implementiertes Verfahren nach einem der vorhergehenden Ansprüche, wobei die Subfunktionen (16a) des Verarbeitungsgraphen (10) Vorverarbeitungs-, Datenfusions-, Fahrfunktionsberechnungs- und KPI-Bewertungsaufgaben des virtuellen Tests (12) und/oder der automatisierten Fahrfunktion (14) des Fahrzeugs ausführen.

9. Computer-implementiertes Verfahren nach einem der vorhergehenden Ansprüche, wobei der erste Datensatz (DS1) des Verarbeitungsgraphen (10) von einer virtuellen Testumgebung bereitgestellt wird, welche Sensordaten, insbesondere Kamera-, Lidar- und/oder Radardaten, eines Fahrzeugumfelds umfasst.

10. Computer-implementiertes Verfahren nach einem der vorhergehenden Ansprüche, wobei die Kostenfunktion des Clusteringalgorithmus (20) durch Berücksichtigung von Parametern, die Datenflüsse und Abhängigkeiten zwischen Knoten (16) repräsentieren, dynamisch angepasst wird.

11. Computer-implementiertes Verfahren nach Anspruch 10, wobei der Verarbeitungsgraph (10) Subfunktionen (16a) umfasst, die unter Berücksichtigung einer Reihenfolge der Datenflüsse in einer hierarchischen Struktur gruppiert werden, wobei Clustern (22) mit aufeinander folgenden Datenflüssen jeweils spezifische Verarbeitungsschritte zugeordnet werden.

12. Computer-implementiertes Verfahren nach einem der vorhergehenden Ansprüche, wobei der Clusteringalgorithmus (20) eine Greedy-Optimierung verwendet, bei welcher die Kosten für alle möglichen Cluster (22) berechnet und der günstigste ausgewählt wird.

13. System (1) zur Optimierung einer Ausführung eines Verarbeitungsgraphen (10) eines virtuellen Tests (12) für eine automatisierte Fahrfunktion (14) eines Fahrzeugs, umfassend:
eine Datenbereitstellungseinheit (26), die konfiguriert ist, einen ersten Datensatz eines Verarbeitungsgraphen (10) bereitzustellen, der einen virtuellen Test (12) für eine automatisierte Fahrfunktion (14) eines Fahrzeugs beschreibt, wobei der Verarbeitungsgraph (10) durch Knoten (16) repräsentierte Subfunktionen (16a) der automatisierten Fahrfunktion (14) aufweist und Kanten (18) des Verarbeitungsgraphen (10) einen Datenfluss zwischen den Subfunktionen (16a) definieren;
eine Clustereinheit (28), die konfiguriert ist, einen Clusteringalgorithmus (20) auf den Verarbeitungsgraphen (10) anzuwenden, um die Knoten (16) des Verarbeitungsgraphen (10) zu Clustern (22) zusammenzufassen, wobei jedes Cluster (22) eine oder mehrere Subfunktionen (16a) des virtuellen Tests (12) und/oder der automatisierten Fahrfunktion (14) des Fahrzeugs repräsentiert, und wobei eine Kostenfunktion des Clusteringalgorithmus (20) das Clustering des Verarbeitungsgraphen (10) in Bezug auf eine Ausführungseffizienz des Verarbeitungsgraphen (10) maximiert; und
eine Ausgabeeinheit (30), die konfiguriert ist, einen zweiten Datensatz eines optimierten Clusterings der Subfunktionen (16a) des virtuellen Tests (12) und/oder der automatisierten Fahrfunktion (14) des Fahrzeugs auszugeben.

14. Computerprogrammprodukt mit einem Computerprogramm, das Softwaremittel zur Durchführung eines Verfahrens nach einem der Ansprüche 1 bis 12 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 12 auszuführen, wenn das Computerprogramm auf einem Computer ausgeführt wird.
